# EUROPEAN PATENT SPECIFICATION

(11) **EP 3 774 530 B1**
(45) Date of publication and mention of the grant of the patent: **04.10.2023**
(21) Application number: 19784203.2
(22) Date of filing: 07.04.2019
(51) Int. Cl.: B64C 27/08, B64C 39/02, B64D 27/02, B64C 39/00, B64U 10/13, B64U 50/13

(54) **IMPROVED MANEUVERABILITY AERIAL VEHICLE AND A METHOD IMPLEMENTED FOR THIS PURPOSE**
LUFTFAHRZEUG MIT VERBESSERTER MANÖVRIERFÄHIGKEIT UND IMPLEMENTIERUNGSVERFAHREN FÜR DIESEN ZWECK
VÉHICULE AÉRIEN À MANOEUVRABILITÉ AMÉLIORÉE ET PROCÉDÉ MIS EN OEUVRE À CET EFFET

(30) Priority: 08.04.2018 US 201862654446 P; 19.08.2018 IL 26123618
(43) Date of publication of application: 17.02.2021
(73) Proprietor: Aerotor Unmanned Systems Ltd., Moshav Udim (IL)
(72) Inventor: AGRONOV, Aharon, 4256510 Netanya (IL)
(74) Representative: Straus, Alexander
(86) International application number: PCT/IL2019/050394
(87) International publication number: WO 2019/198071

(56) References cited:
- EP-A1- 3 098 161
- CN-A- 106 516 131
- CN-U- 202 244 078
- CN-U- 202 244 078
- CN-U- 204 895 843
- CN-U- 204 895 843
- US-A1- 2002 104 922
- US-A1- 2002 104 922
- US-A1- 2017 121 016
- US-B1- 9 296 477

## Description

### Field of the Invention

The invention that is the subject of the Patent Application relates to devices and methods used for maneuvering a multi-blade aerial vehicle (multirotor or multicopter) in general, and particularly for maneuvering relatively small unmanned aircraft systems (UAS) or unmanned aerial vehicles (UAV) having multiple rotor blades.

### Background of the Invention

The background description of the invention and the invention to be provided below relate to multirotor drones, but given the description provided below with reference to the accompanying figures, the skilled person would understand that the invention is applicable to any manned or unmanned multirotor aerial vehicle.

It is known that drones are unmanned aerial vehicles that create lift by the rotation of the rotor blades. The most common of these multirotor aerial vehicles (i.e. drones fitted with multiple rotors), each having multiple rotor blades, which are called "quadcopters", as they are fitted with a system of four fixed rotors.

In these drones, the axis of movement of each of the rotors is perpendicular to the direction of flight (although at most they may all be somewhat tilted towards the center of the drone to improve its stability). The rotor blades themselves have a fixed pitch angle, i.e. the blade has a fixed angle of attack (AOA) relative to the rotation of the rotor or the airflow. Similar to what we know from helicopters or advanced turboprop propelled aircraft, the rotor blades of known quadcopter drones, enable the in-flight aerodynamic modification of the pitch angle of each of the blades (i.e. the angle between the aerodynamic surface of the blade and the relative wind direction can be dynamically modified in direction in each blade individually, while in flight).

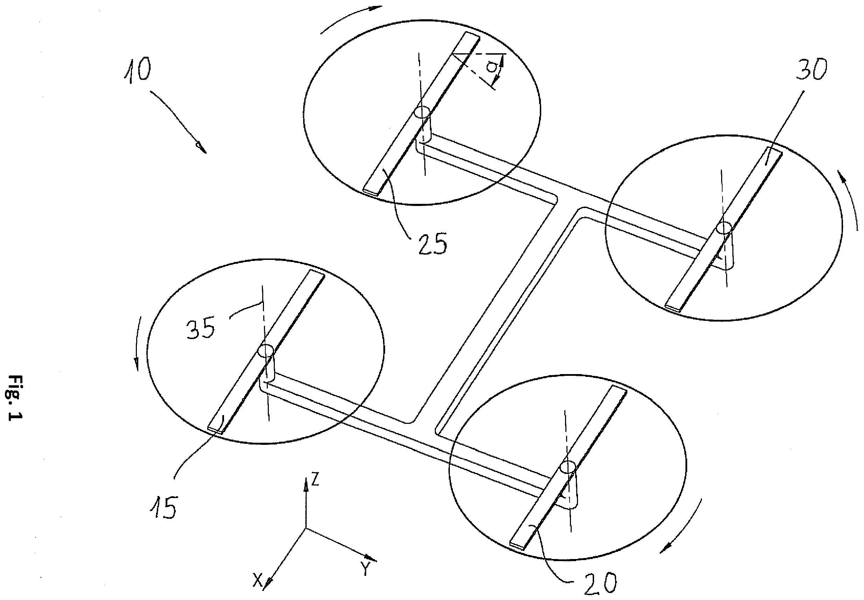

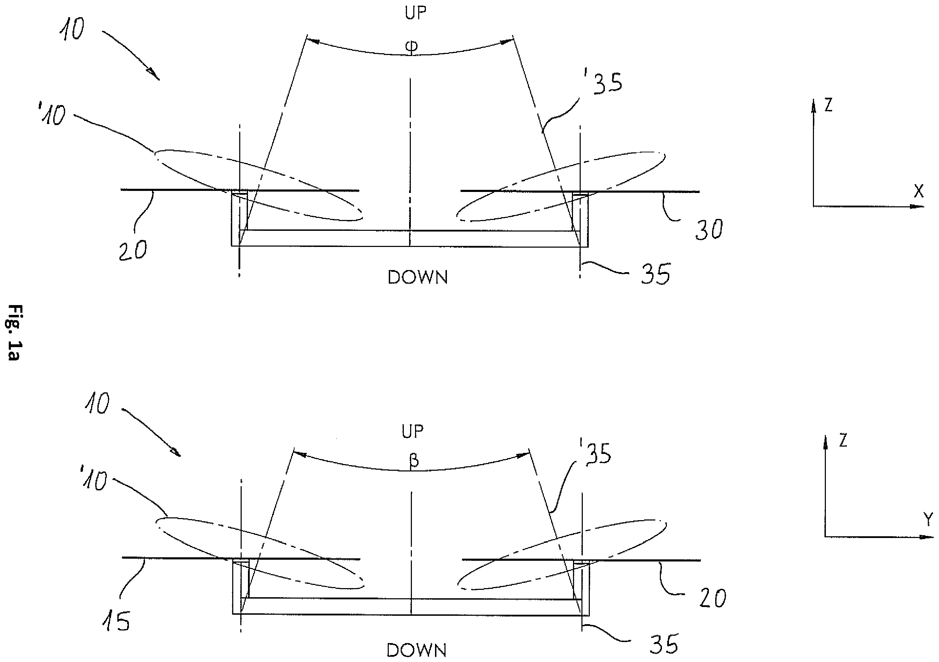

Reference is made to **Figs. 1** **and** **1a****.** Fig. 1 is a schematic perspective view of prior art quadcopter drone 10. That is to say, this is a drone with an array of four rotors (15, 20, 25 and 30), each of which has an axis of movement (35) that is perpendicular to the X-Z plane, wherein the rotors have multiple blades (in the illustrated example - two blades per rotor), which also enables modifying their pitch angles (α). Fig. 1a depict schematic front and side views (see the initial axis) of drone 10, as well as a schematic front and side view (in broken lines) of drone '10, which is also a prior art drone. In drone '10, as opposed to drone 10, the axis of movement of each of its rotors ('35) are not perpendicular in their orientation to the plane of flight (X-Z), as in drone 10, but all slightly tilt towards the center of the drone towards one point (to improve drone '10 stability), while creating two convergence angles (see Fig. 1a - β as the first angle projection in the front view and ϕ as the second angle projection in the side view).

In drones, such as quadcopter 10 and '10, rising in altitude is achieved by acceleration of all four rotors simultaneously, and altitude is reduced by slowing the rotation of all the rotors. Control of flight movements (the pitch, roll, and yaw movements) is generally achieved by modifying the relative speeds of the different rotor blades.

In a four-rotor array drone, such as quadcopters 10 and '10, two rotors are positioned diagonally to each other, rotating in one direction, while the other two are rotating in the opposite direction (see directions of the arrow in the figure). That is to say, two rotors rotate clockwise and two counterclockwise (in a way that resets the reaction torque), which may cause the drone to rotate (yaw), and there is no need to invest energy in preventing its yawing. In such a configuration, it is easy to control the roll or pitch planes. Increasing the speed of two rotors on one side and slowing down the other two rotors on the other side will cause rolling or pitching (depending on the nature of the pairs of rotors). In other words, the speed of two rotors on the same side will be increased to create a rolling motion. To create a pitching motion, the speed of the two front rotors will be increased to lift the drone's nose, or the two rear rotors in order to lower the drone's nose.

In other words, the movement of the drone is controlled only by the differences in the rotation speed of the drone's blades. At the same time, in the illustrated example, as this involves quadcopter drones, which as stated enable modifying the pitch angles (α) of the rotor blades, angle modification can also be used for maneuvering the drone in all planes of flight.

However, the skilled person is aware that such drones, and not only the type that enables modifying the pitch angle (α) of the rotor blades, do not produce a rapid yaw movement from the time such a maneuver is sought. Maneuvering such drones on the yaw plane is relatively slow and unwieldy, as it is not enough to modify the pitch angle of the rotor blades to produce the torque needed to perform a quick maneuver in the yaw plane. An attempt to yaw such a drone only by modifying the pitch angles of the rotor blades calls for considerably increasing the pitch angle to induce a high drag that will produce the torque needed for rapid yawing. The formation of a high drag impairs flight performances, poses a risk of stalling, and requires lowering the speed of the blades (lowering the RPM).

Moreover, maneuvering a quadcopter drone by increasing the speed of two rotors on one side and slowing down two rotors on the other side naturally involves, as previously noted, having means for monitoring and controlling the rotation speeds of all the rotors in the array (in other words, the need to monitor and control the RPM of the rotors), in a way that calls for installing multiple electric engines that require a power source (battery) or that have an internal combustion engine (gasoline-powered engine), (which could be installed as part of a hybrid propulsion system - an internal combustion engine (gasoline-powered) with an electric engine for backup), which is connected to the reduction/increase gears of each of the rotors. These are clumsy and cumbersome measures (battery, speed reduction/increase gears), which weigh down on the drone and reduce the effective payload it can carry.

It should also be borne in mind that the requirements for carrying the effective weight (payloads such as electro-optic payloads, armaments, etc.) over a long flight time pose ever-increasing challenges for drone designers. Flying with a heavy weight and over a long flight time generally leans towards preferring the use of an internal combustion gasoline-powered engine that is considered economical and efficient. However, as noted, the gasoline-powered engine does not allow for conveniently monitoring and controlling engine revolutions per minute (RPM), but with additional rather considerable weight (the required transmissions).

Therefore, when it comes to improving maneuverability, the solution of propelling the array of rotors by a gasoline engine with a constant RPM combined with the ability to modify the rotor blades' pitch angles (α) is not sufficient, since, as stated, it is not enough to change the rotor blades' pitch angles to produce the torque needed to perform a quick maneuver in the yaw plane.

Thus, prior to the date of the current invention, there was no effective solution to enable a multi-blade drone, such as a quadcopter, to make use of the preferred gasoline engine (by itself or in a hybrid system with one or more electric engine(s)) while enhancing the drone's yaw maneuverability.

Quadcopters and aerial vehicles represenative of the state of the art are known from the documents US2002/104922A1, US9296477B1, CN204895843U, CN202244078U and EP3098161A1.

### Summary of the Invention

The invention, which is the subject of the Patent Application, addresses the challenges described above.

In one aspect, the invention is embodied in a quadcopter drone in accordance with claim 1.

In another aspect, the invention is embodied in a method for providing improved yaw maneuverability of a quadcopter drone in accordance with claim 4. The method could comprise the additional stage of maneuvering the aerial vehicle to yaw by increasing the pitch angle (α) of the blades of diagonally opposite pair of rotors, each from another pair of the symmetrically tilted pairs of rotors, and reducing the pitch angle (α) of the remaining rotor blades that are also diagonally opposite each other, each from a different pair of the symmetrically tilted pairs of rotors.

In a preferred embodiment of the invention, the quadcopter drone has a propulsion system that comprises an internal combustion engine (gasoline-powered), and when the said method is implemented, it enables the drone to maneuver in the yaw plane without modifying the speed of the blades (maintaining a constant RPM).

In yet an additional aspect, the invention is implementable in a quadcopter drone in accordance with claim 6.

Other aspects, additional embodiments and advantages of the drone and the flight method implemented in its operation will be described below. It should be borne in mind that the configurations described below may be combined with other configurations in different ways, which are at least consistent with one of the principles of the invention described below, and the terminology used here should not be construed as limiting in any way.

### Brief Description of the Accompanying Figures

Different aspects of at least one embodiment of the invention will be described below, with reference to the accompanying figures (while no scale should be attributed to them). The figures are presented for illustrative purposes only and for facilitating an understanding of the different aspects of the invention and the possible embodiments for its actual utilization. The figures are part of the description, but should not be construed as limiting the invention in any way. In the figures, an identical or similar element that is visually depicted in several figures could be tagged by uniform numbering. For clarity, not every element was tagged in each of the figures. In the following figures:
**Figs. 1** **and** **1a** are as stated (respectively) a schematic perspective view of a prior art quadcopter drone as well as schematic front and side views of said drone (as well as a prior art drone where the axis of movement of each of its rotors all slightly tilt toward the center of the drone).

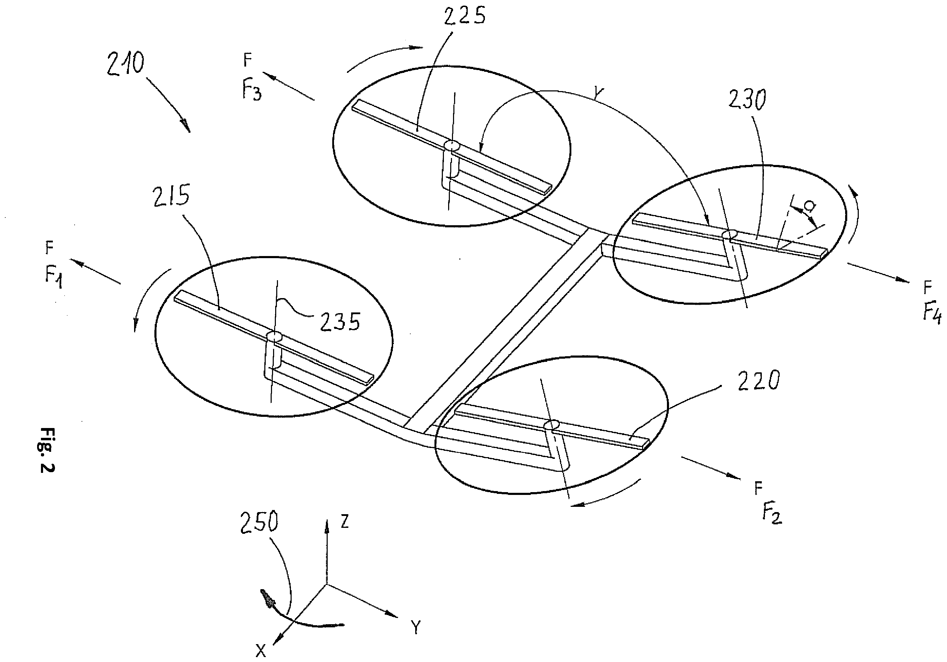

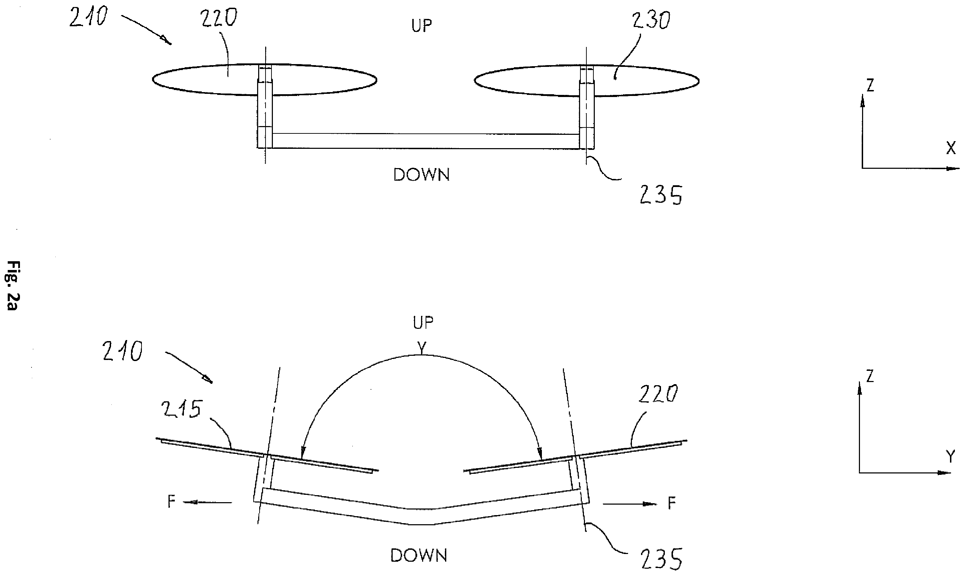

**Figs. 2** **and** **2a** are (respectively) a schematic perspective view of one example of a quadcopter drone according to the invention having improved maneuverability in the yaw plane, as well as front and side schematic views of said drone.

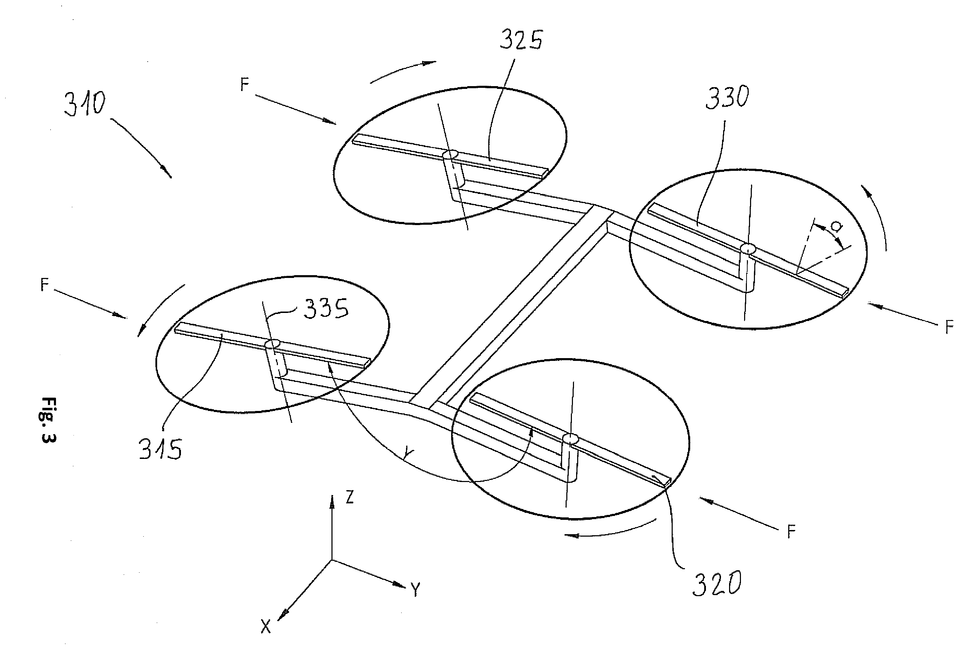

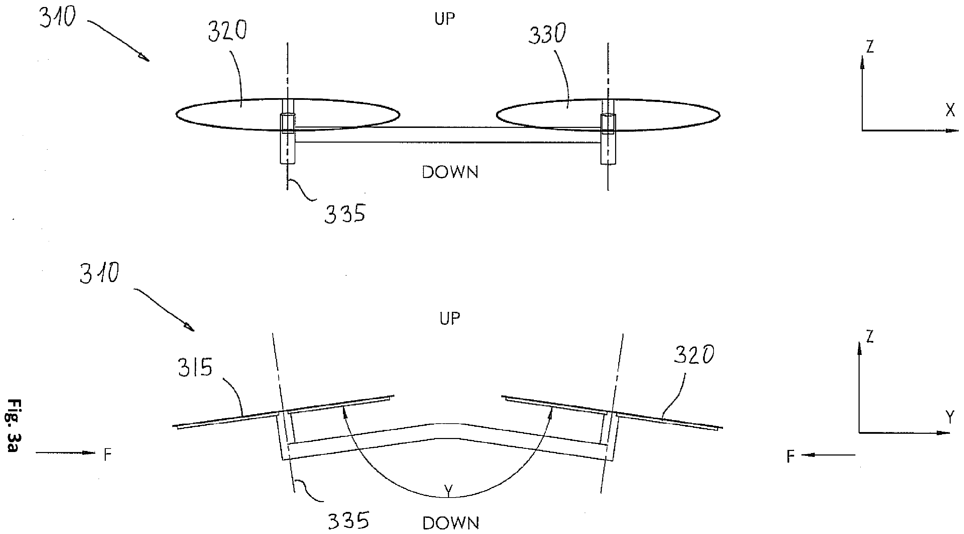

**Figs. 3** **and** **3a**; 4 and 4a; and 5 and 5a are schematic perspective views and front and side schematic views of three other embodiments of quadcopter drones according to the invention, which, like the example drone illustrated in Figs. 2 and 2a, also structurally embodies the distinct feature of the invention (although in different geometries), in a manner that gives them, as aforesaid, improved maneuverability in the yaw plane.

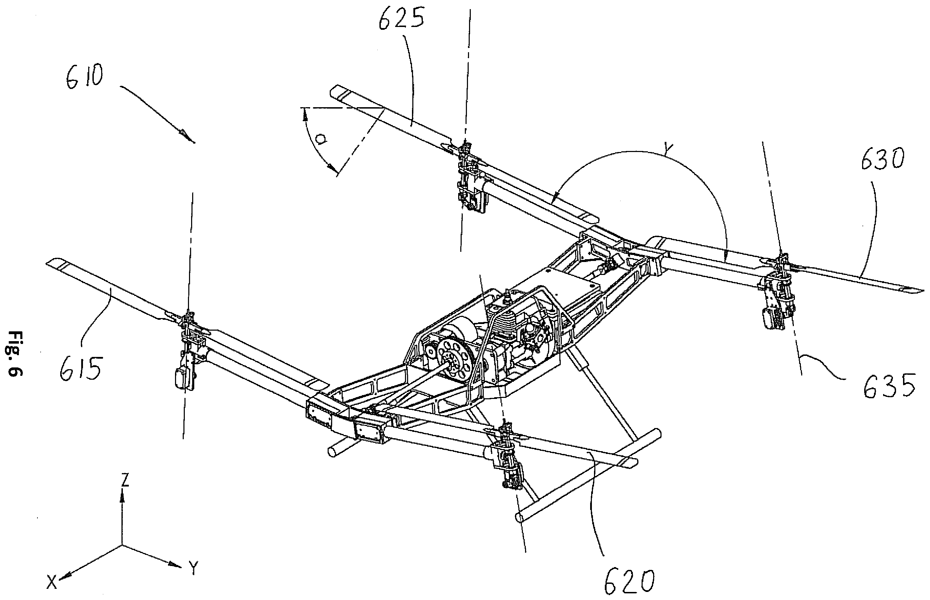

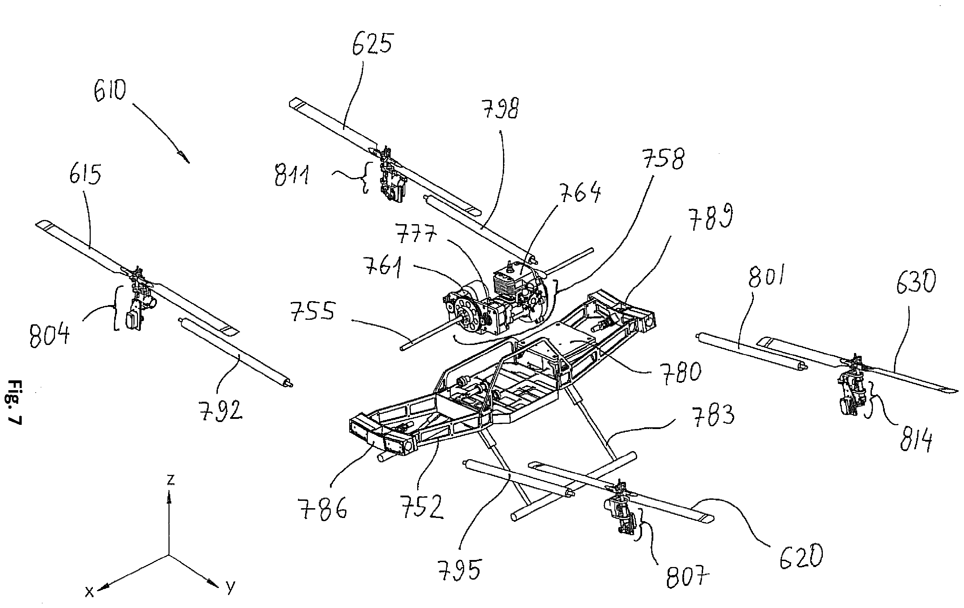

**Figs. 6** **and** **7** (respectively) depicts a perspective view of a quadcopter drone that structurally embodies the geometrical configuration of the invention, as schematically illustrated and by way of example only in Fig. 2, and an "exploded" view of its elements.

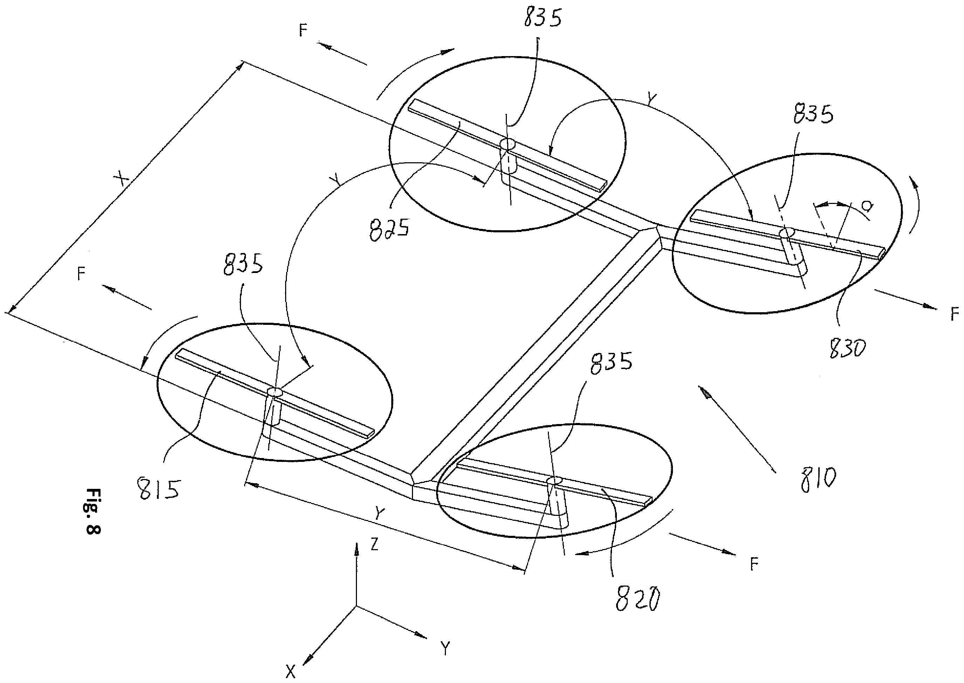

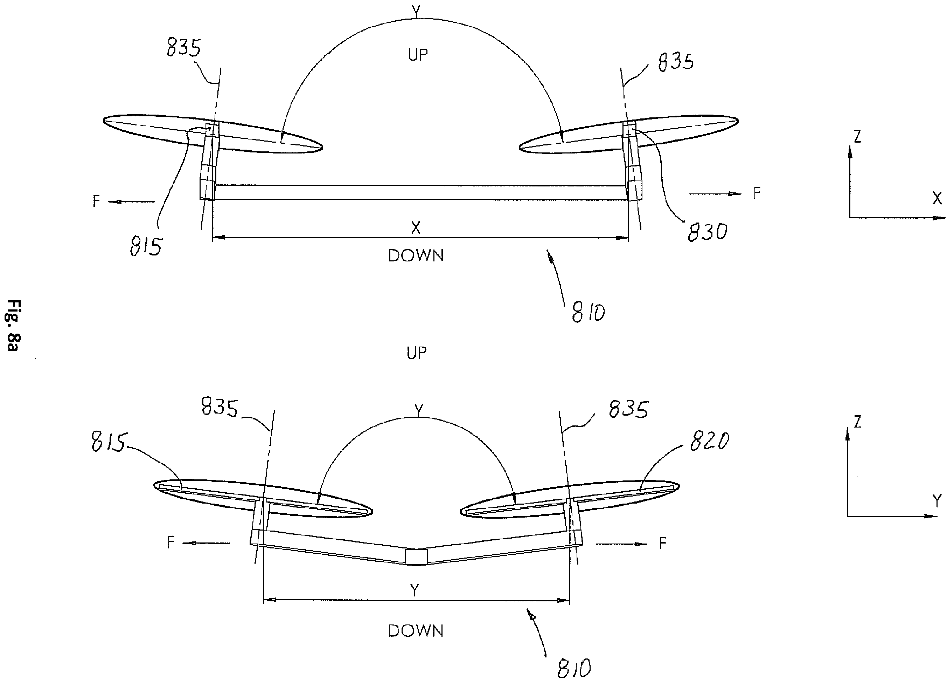

**Figs. 8** **and** **8a** are (respectively) a schematic perspective view of drone where the axis of movement of each of its rotors all slightly tilt toward the center of the drone but wherein the improved yaw maneuverability of the aerial vehicle in accordance with the invention, is achieved by providing the aerial vehicle with one geometrical dimension between its forward pair of rotors and rearward pair of rotors and a second different dimension between the rotors of each of said pairs, and a schematic front and side views of said drone .

### Detailed Description of Preferred Embodiment of the Invention -

Various devices and elements will be described below strictly for the purpose of giving an example of embodiment of the claimed invention. The embodiment described below does not limit the claimed invention, and the latter may also apply to devices and methods that differ from those described below. The claimed invention does not have to include all aspects of devices, elements and methods to be described below, and is not strictly limited to those that exist in all the embodiments described below. For the sake of integrity, it should be noted that the set of claims on the invention may be revised by way of amendment and/or by filing a divisional application. The skilled person will also understand that, for the sake of clarity, the embodiments are described without inundating the description with elements, methods and processes that are already considered to be common knowledge in the field, and in any case no tagged reference was provided to them in the figures.

Reference is made to **Figs. 2** **and** **2a****.** Fig. 2 is a schematic perspective view of one example of quadcopter drone 210 according to the invention, which, as explained below, has improved maneuverability in the yaw plane over the prior art (see and compare, for example, drones 10 and '10, as described above in reference to Figs. 1 and 1a). Fig. 2a shows schematic front and side views of drone 210.

A prominent feature of drone 210 is that the axis of movement (235) of each of the four rotors - 215, 220, 225 and 230 installed therein tilt from the outset in a symmetrical configuration in relation to x-y (yaw) plane, so that each pair of axis converge towards another point on the same level along the drone's longitudinal axis plane (in the illustrated example - along x-z plane), in creating a γ angle between the yaw planes of the rotor blades that is less than 180°.

As mentioned above in the "Background of the Invention" chapter, it is known that there are quadcopter drones in which the axis and rotors of their engines tilt towards the center of the drone in order to increase the drone's stability (the tilt improves the drone's stability at the expense of pitch and roll maneuverability) (see Fig. 1a for drone '10). However, in contrast in drone 210, this is not a case where all the axis of movement tilt towards the center of the drone, but a symmetrical tilt of pairs of axis towards different points on the same level, along the longitudinal axis of the drone (see the illustrated example - a tilt towards plane x-z).

Another feature of drone 210 is that it is a type of drone that enables modifying the pitch angle (α) of its rotor blades.

The symmetrical tilt of the axis of movement of the pairs of rotors in drone 210, which we pointed to earlier, in combination with the ability to dynamically modify the pitch angles of the blades of each of the rotor, enables producing torques in the (x-y) yaw plane, which give drone 210 improved yaw maneuverability, without having to adjust the rotors' rotation speed (in other words - while maintaining a constant RPM).

The symmetrical tilt of the axis of movement of the pairs of rotors generates side forces (F) that contribute to and increase the relative small torque due to the drag, which is usually generated by the modification of the pitch angle of the blades, in a way that provide the drone according to the invention, improved maneuverability in the yaw plane.

Thus, for example (see Fig. 2), the symmetrical tilt of the axis of movement of the pairs of rotors, which are built into the drone according to the invention, regularly generate side forces (F). At the same time, when increasing the pitch angle (α) of rotor blades 215 and 230 and reducing the pitch angle (α) of rotor blades 220 and 240, this produces a torque that together with side forces F₁ and F₄ (which will increase due to increasing of the pitch angle as stated) will maneuver drone 20 to yaw in x-y plane in the direction of arrow 250 (clockwise).

At the same time and as previously noted, the improved maneuverability in the yaw plane of the drone according to the invention is achieved even without having to modify the relative speeds of the rotors. Therefore, a drone according to the invention could be fitted with a propulsion system that is based on an internal combustion engine (gasoline-powered), which as mentioned in the "Background of the Invention" chapter, is preferred for achieving long flight time and carrying a relatively heavy effective weight (payload).

The skilled person will understand that the tilt of the pairs of rotors, so that each pair of axis converge towards different points on the same level in the drone's longitudinal axis plane (x-z plane according to the illustrated example), while creating a γ angle between the rotation planes of the blades, somewhat impairs the lifting performances of the drone in which the invention will be implemented (and therefore shortens its flight time). However, it was found that in order to achieve the improved maneuvering advantage in the yaw plane (and the advantage of the ability to fly the drone by means of an internal combustion engine (gasoline-powered) at a constant blade speed (constant RPM)), it is enough to slightly tilt the rotors' axis so that the γ angle of the drone according to the invention will be 140⁰ <γ < 180⁰, without significantly impairing the drone's performances (as dependent of course on other rather familiar design considerations, such as engine power, drone geometry (e.g. - distance of the rotors from the drone's longitudinal axis, etc.). At most, and given the advantage of propulsion at constant blade speed, the constant speed (RPM) may be increased to compensate for the loss of lift performances.

The skilled person will also understand that in the said embodiment of the tilt of the axis of the pairs of rotors, so that each pair of axis converge towards different points on the same level along the drone's longitudinal axis plane (x-z plane according to the illustrated example), in creating a γ angle between the rotation planes of the rotor blades, the invention may also be applied to drones having a hybrid propulsion system (drones that combine an internal combustion engine (gasoline-powered) with a backup electric engine).

The skilled person will also understand that in the said aspect of the tilt of the rotors' axis, so that each pair of axis converge towards different points on the same level along the drone's longitudinal axis plane (x-z plane according to the illustrated example), in creating a γ angle between the yaw planes of the rotor blades, the invention may also be applied not only in quadcopter drones (which by definition comprise an array of four rotors), such as drone 210, but also in other multirotor drones (e.g. drones having arrays of 6, 8, 10 or 12 rotors).

Furthermore, according to the illustrated example, the tilt of the pairs of rotors, so that each pair of axis converge towards different points on the same level along the drone's longitudinal axis plane, takes place on the x-z plane in the upward direction, but the skilled person will understand that the tilt of these pair of axis, according to the invention, could be also applied on the same plane also downwards or on other planes of the drone (upward or downward).

Reference is made to **Figs. 3** **and** **3a**; 4 and 4a; And 5 and 5a. Figs. 3 and 3a; 4 and 4a; and 5 and 5a are side views of three other configurations of quadcopter drones according to the invention (respectively) - 310, 410 and 510, in which, like drone 210 that we pointed to previously (in reference to Fig. 2), the distinct feature of the invention is also implemented in the structure of these drones, i.e. the symmetrical tilt of the axis of movement of pairs of rotors, whereby each pair of axis converges towards different points on the same level along the drone's longitudinal axis plane. However, unlike drone 210, in drones 310, 410, and 510, the tilt is in different directions and/or in other planes (compared to the initial axis, as defined in Figs. 1, 2 and 2a).

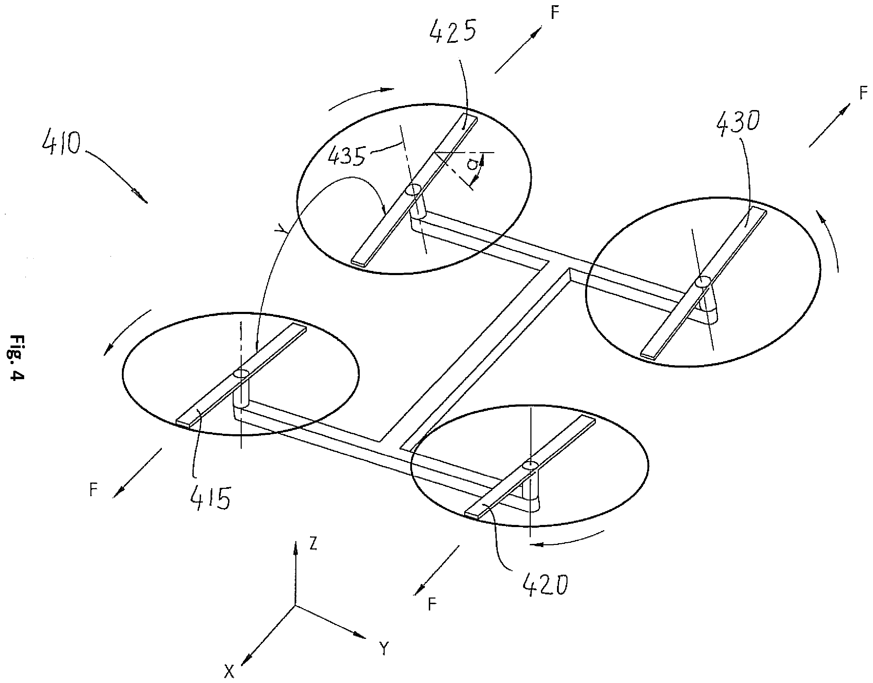

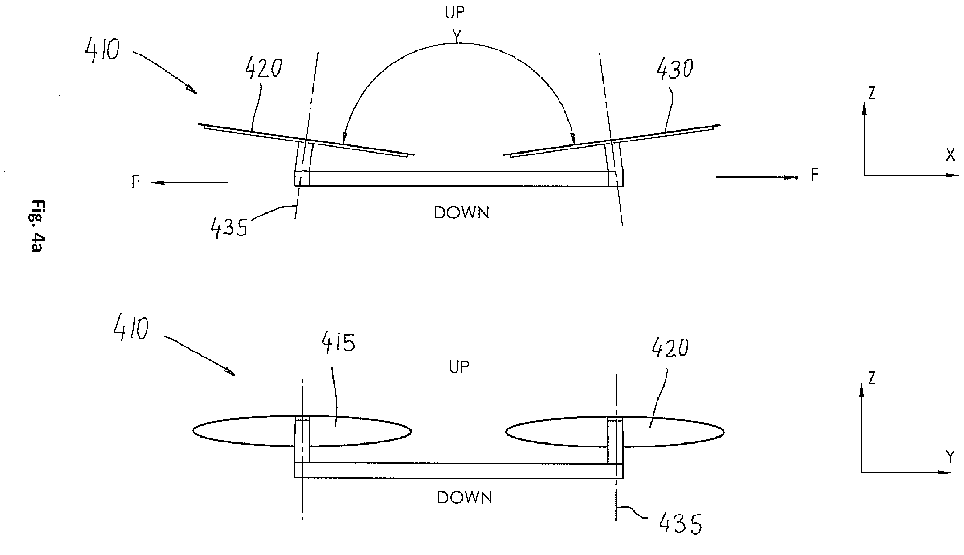

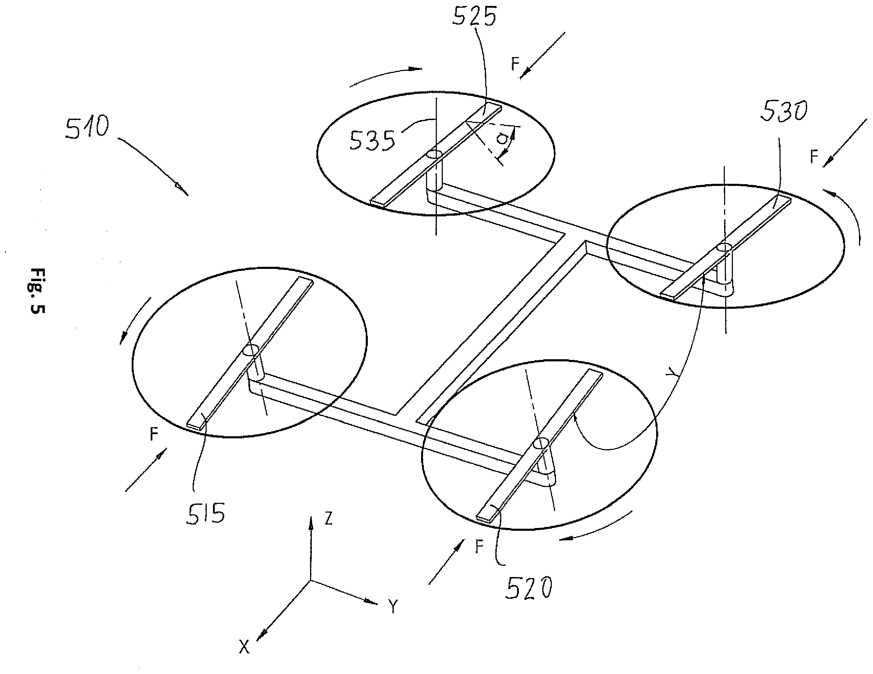

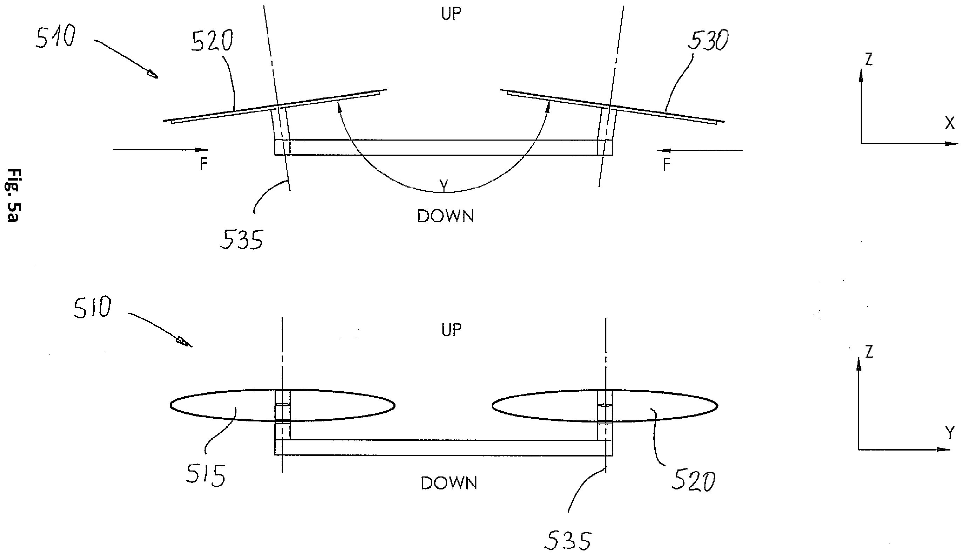

In drone 310, which is illustrated in Figs. 3 and 3a, the axis of movement (335) of the pairs of rotors (315, 320, 325, 330) are tilted outward and converge downward (as opposed to the axis of movement of the pairs of rotors of drone 210, which tilt inward and converge upward). In drone 410 illustrated in Figs. 4 and 4a, the axis of movement (435) of the pairs of rotors are tilted to create a γ angle between the rotation planes of pair of rotors 420 and 430 and create a γ angle between the rotation planes of pair of rotors 415 and 425. In other words, the axis converge upward towards another longitudinal axis plane of the drone (to y-z plane, as opposed to the x-z plane to which the pairs of axis converged in drone 210). In drone 510, illustrated in Figs. 5 and 5a, the axis of movement (535) of pairs of rotors tilt outward and converge downward to create a γ angle between the yaw planes of pair of rotors 520 and 530 and create a γ angle between the rotation planes of pair of rotors 515 and 525 (while in addition to and similar to drone 410, they converge towards another longitudinal axis plane of the drone (to y-z plane as opposed to the x-z plane to which the pairs of rotors axis converged in drone 210).

The skilled person will understand that the symmetrical tilts of the axis of movement of pairs of rotors, as illustrated in drones 310, 410 and 510, in combination with the dynamic ability to modify the pitch angles of the blades of each of the rotors fitted therein, enable producing torques in the yaw plane (x-y), which provide each of them, similar to drone 210, improved yaw maneuverability, without having to adjust the rotors' rotation speed (in other words - while maintaining a constant RPM). All that is needed for drones 310, 310 and 510 to perform a yaw maneuver is to increase the pitch angle (α) of diagonally opposite pair of rotors, each from another pair of the two symmetrically tilted pairs, and reduce the pitch angle (α) of the remaining diagonally opposite pair of rotors, each from another pair of the symmetrically tilted pairs, in a way that recruit the side forces (F), the end products of the symmetrical tilts of pairs of rotors, to increase the required torque for an efficient yaw maneuver.

Reference is made to **Figs. 6** **and** **7****.** Figs. 6 and 7 (respectively) show a perspective view of quadcopter drone 610, which structurally embodies a specific geometrical configuration of the invention, as described above for drone 210 (in reference to Figs. 2 and 2a that show a schematic illustration of drone 210 by way of example only); and an "exploded" view depicting the elements of drone 610.

As to be described below in reference to the figures, drone 610 is a quadcopter having a hybrid propulsion system (internal combustion engine fitted alongside an electric engine to be operated as a backup should one of them fail) and enables modifying the pitch angle (α) of the blades of the four rotors - 615, 620, 625 and 630 fitted therein (each having a two-blade configuration). In drone 610, the propulsion system propels all four rotors at an equal speed at a given time (i.e. a drone having a constant RPM).

As previously noted, drone 610 structurally embodies a specific geometric configuration of the invention, as described above for drone 210 - from the time it is assembled, the axis of movement (635) of each of the four rotors are symmetrically tilted in relation to the x-y yaw plane, so that each pair of axis converge towards different points on the same level along a longitudinal axis plane of the drone (x-z plane), while creating a γ angle between the rotation planes of the rotor blades that is less than 180°.

Drone 610 is comprised of chassis element 752, which may be manufactured, for example, from aluminum or composite materials. Main drive shaft 755 serves to shift drive from propulsion system 758, on either side, to the rotors. The propulsion system of drone 610 is as stated a hybrid system, and is comprised of electric engine 761, which is fitted in tandem configuration with and parallel to internal combustion engine 764 (according to the illustrated example, in a tandem configuration - side by side - at the center of the drone). In the case of a failure, electric engine 761 may be actuated by clutch assembly 777, which enables propelling the main drive shaft by the electric engine in the event of a malfunction/failure of the internal combustion engine (and vice versa). Clutch assembly 777 may also include reduction gears to adjust the number of revolutions of the propulsion system as required. Shelf 780 is also formed on chassis element 752. The shelf serves for mounting the drone's avionic assemblies on it (assemblies that are not illustrated, but usually include communication, navigation, autopilot and command systems). Landing gear 783 is fitted under the chassis element. The skilled person will understand that the chassis element may also be made with reinforcement rods (not illustrated) extending from it towards each of the rotors. The propulsion generated from propulsion system 758 is transferred through main drive shaft 755, simultaneously to two gear assemblies 786 and 789. The gear assemblies are each formed in a T configuration as conical cogwheel gears to enable splitting the propulsion simultaneous with angularly tilting its direction.

According to the illustrated example, the angular tilt occurs in the gear assemblies in a manner that leads to tilting the axis of movement (635) of each of the four rotors in a symmetrical configuration in relation to the x-y yaw plane, so that each pair of axis converge towards different points on the same level along a longitudinal axis plane of the drone (x-z plane), while creating a γ angle between the rotation planes of the rotor blades that is less than 180°. The skilled person will understand that this is only an example, and that the tilt sought can also be produced by other means, e.g. by installing gears that enable such tilting near each of the rotors.

The propulsion from the gear assemblies towards each of the rotors is transferred by driveshaft bars 792, 795, 798 and 801. Each of the driveshaft bars is connected to gear assembly L, which is aligned on its side to propel a rotor. Driveshaft bar 792 is connected to gear assembly L 804 (propelling rotor 615), driveshaft bar 795 is connected to gear assembly L 807 (propelling rotor 620), driveshaft bar 798 is connected to gear assembly L 811 (propelling rotor 625), and driveshaft bar 801 is connected to gear assembly L 814 (propelling rotor 630).

The gear assemblies are each formed in an L configuration as a gear implementing conical cogwheels in a way that enable angularly tilting the direction of the propulsion. According to the illustrated example, the angular tilt achieved by gear assembly L is 90⁰ (since the angular tilt needed to obtain a γ angle between the rotation planes of the blades is already produced by the T gear assemblies (786 and 789)). However, the skilled person will understand that also the L gear assemblies may be formed as gears, for example, of conical cogwheels, in a way that enable achieving the sought tilt required for obtaining the γ angle, in whole or in part, at this site.

L gear assemblies each also comprise an assembly for actuating the modification of the pitch angle (α) of the rotor blades to which it is connected. The skilled person is familiar with a range of such actuating assemblies, which could be based, for example, on a tiny electric servo engine with a transmission that translates the engine's movement into opposite linear movements of pairs of arms that are connected to the rotor blades and modify their pitch angle in a pivotal movement. Fitting each of the rotors as illustrated, with a pitch angle modification actuator enables as said, dynamically, during flight, modification of the pitch angle, for each specific rotor, of said specific rotor blades.

As noted, drone 610 is only an example of how the invention is implemented. A drone such as drone 610 has already been tested and proven to have improved efficiency in yaw plane maneuvering. The γ angle between the rotation planes of the test drone designed to be within the range according to the invention - 173⁰ in the test drone. The test drone was fitted with an electric engine, type AXI-F3A-53XX (2500W) and a two-stroke piston internal combustion engine type ZENOAH 26cc (2.5 HP). As stated, the test drone comprised of four two-blade rotors, each with a blade length of 330 mm. During its flight and in achieving the improved maneuverability, it was enough to exploit the possibility of modifying the blades pitch angle (α) within an angle range of 0-6⁰ (wherein the pitch angle modification (α) actuators allow for a much larger angular modification (-23⁰- +35⁰). In other words, operating the test drone according to the invention at a constant RPM merely required a relatively slight modification of the blades' pitch angle, in a manner that maintained a relatively low drag and did not affect their efficiency in order to achieve improved yaw performance (as a result of the contribution of side forces (F) achieved according to the invention, see Fig. 2 and the explanations provided above in this context). The dimensions of the test drone were 90 cm * 90 cm (distance between the rotors blades rotational planes axis). The takeoff weight was 11 kg. The test drone carried a 3 kg payload in a flight mission profile for about three hours, and was designed for flight at altitudes of up to 12,000 feet at an average cruising speed of 65 knots, while demonstrating improved yaw maneuverability as stated, in light of the implementation of the invention in the drone' structure.

Therefore, drone 610 as described above in relation to Figs. 6 and 7 is a practical and proven example of the application of the invention, but any skilled person will understand that this is only an example, and the invention could also be applied in other geometrical configurations (see, for example, the different geometries of drones 310, 410 and 510, as described above in reference to Figs. 3 and 3a; 4 and 4a; and 5 and 5a).

Moreover, the skilled person will understand that this as stated is only an example also with respect to the type of drone (quadcopter in this specific case) and with respect of the various structural components used - propulsion systems, transmissions/gears, blades, etc. as well as commercially known components and assemblies.

In fact, in view of the description provided above in referring to the accompanying figures, the skilled person will understand that the invention is also embodied in a general method. A general method applicable in a wide range of multi-blade drones which provide the ability to modify the pitch angle of the rotor blades fitted therein (α) for providing those drones with improved yaw maneuverability and while enabling easy installation of a clearly preferred propulsion system - an internal combustion engine (gasoline-powered). This is achieved in light of achieving the improved maneuverability also at a constant RPM (therefore, avoiding the need to install the drone with unwieldy reduction gears).

A method that includes the stage of providing the axis of movement (235, 335, 435, 5353, 635) of each of the rotors installed therein, wherein they are tilted in a symmetrical configuration in relation to the aerial vehicle's yaw plane (x-y) so that each pair of axis converge towards another point on the same level along a longitudinal axis plane of the drone while creating a γ angle between the rotation planes of the blades of each pair, which is less than 180° but greater than 140⁰.

In the second state, the method could include maneuvering the aerial vehicle to yaw by increasing the pitch angle (α) of the blades of diagonally opposite pair of rotors, each from another pair of said symmetrically tilted pairs of rotors, and reducing the pitch angle (α) of the blades of the remaining rotors that are also diagonally opposite each other, each from a different pair of said symmetrically tilted two pairs of rotors.

Furthermore, in light of the description given above with reference to the accompanying figures, the skilled person will understand that the invention can be applied not only to unmanned multi-blade aerial vehicles (drones according to the examples provided here), but also to manned multi-blade aircraft, (i.e. that include a team such as a pilot or even medic - in the event of a multi-blade aircraft that is flown by remote control, but serves for rescuing an injured person and treating him in flight).

In addition, in light of the description provided hereinabove while referring to the accompanying figures, a skilled person will also understand that generating side forces (F) that contribute to and increase the relative small torque due to the drag, which is usually generated by the modification of the pitch angle of the aerial vehicle rotors blades, in a way that provide the aerial vehicle according to the invention, with improved maneuverability in the yaw plane, is also achievable in the design of multi-blade aerial vehicle of the type wherein the axis of each of its rotors are all tilted towards the center of the aerial vehicle (see for example quadcopter drone '10 as depicted in figs 1 and 1a and described hereinabove in the "Background of the Invention" chapter).

Reference is made to **Figs. 8** **and** **8a****.** Figs 8 and 8a are (respectively) a schematic perspective view of quadcopter drone 810 and a schematic front and side views of said drone. Similarly to drone '10, the axis of movement (835) of each of drone 810 four rotors - 815, 820, 825, and 830, all slightly tilt toward the center of the drone. Another feature of drone 810 is that it is a type of drone that enables modifying the pitch angle (α) of its rotor blades. The improved yaw maneuverability of drone 810 is achieved by providing drone 810 with one geometrical dimension (x) between its forward pair of rotors - 815, 820 and its rearward pair of rotors - 825, 830. and a second different geometrical dimension (y) between the rotors of each of said pairs.

A skilled person will understand that by providing drone 810 with such geometrically different dimensions (x, y) will also generate side forces (F) that contribute to and increase the relative small torque due to the drag, which is usually generated by the modification of the pitch angle (α) of drone 810 rotors blades, in a way that provide drone 810 according to the invention, with improved maneuverability in the yaw plane.

The Patent Applicant provided the above description in referring to the accompanying figures for illustrative purposes only.

## Claims

1. A quadcopter drone (210), that enables modifying the pitch angle (α) of its rotors (215, 220, 225, 230) blades,
wherein-
the axis of movement (235) of at least two pairs of the quadcopter drone's rotors are tilted in a symmetrical configuration in relation to the quadcopter drone's yaw plane, so that each pair converges towards another point on the same level along a longitudinal axis plane of the quadcopter drone while creating an angle (γ) between the rotation planes of the rotors of each pair, which is less than 180° and greater than 140°;
wherein said drone enables maneuvering in its yaw plane, but by modifying the pitch angles (α) of its rotors blades, without changing the rotational speed of said blades;
wherein the axis of movement of the rotors are distanced from each other such that there is no overlap of a rotor blade rotation circles of any of the four rotors;
wherein each pair of rotors consists of one rotor rotating clockwise and one rotor rotating counter-clockwise and diagonally opposite rotors rotating in the same direction.

2. A quadcopter drone according to claim 1, wherein -
the propulsion system of said drone comprises an internal combustion (engine 764).

3. A quadcopter drone according to claim 1, wherein -
the propulsion system of said drone is a hybrid system, and is comprised of an internal combustion engine (764) in tandem with an electric engine (761).

4. A method for providing improved maneuverability in the yaw plane of a quadcopter drone (210) that enables modifying the pitch (α) of its rotors (215, 220, 225, 230) blades, which include the stage of - providing the axis of movement (235) of at least two pairs of the quadcopter drone's rotors, when they are tilted in a symmetrical configuration in relation to the quadcopter drone's yaw plane so that they converge in their direction, each pair towards another point on the same level along a longitudinal axis plane of the drone, while creating an angle (γ) between the rotation planes of the rotor blades of each pair, which is less than 180° but greater than 140°, wherein the axis of movement of the rotors are distanced from each other such that there is no overlap of rotor blade rotation circles of any of the four rotors, wherein each pair of rotors consists of one rotor rotating clockwise and one rotor rotating counter-clockwise and diagonally opposite rotors rotating in the same direction.

5. The method of Claim 4, wherein the method comprises in addition, the stage of - maneuvering the quadcopter drone to yaw by increasing the pitch angle (α) of diagonally opposite pair of rotor blades, each from another pair of said symmetrically tilted two pairs of rotors, and reducing the pitch angle (α) of the blades of the remaining pair of rotors that are also diagonally opposite each other, each from a different pair of said symmetrically tilted two pairs of rotors.

6. A quadcopter drone (810), wherein the axis of movement (835) of each of the quadcopter drone's rotors (815, 820, 825, 830) tilts toward the center of the quadcopter drone and said quadcopter drone is of the type that enables modifying the pitch angle (α) of its rotors blades, wherein-
said quadcopter drone is formed with one geometrical dimension (x) between its forward rotors and its rearward rotors and a second different geometrical dimension (y) between the rotors of each of forward and rearward rotors,
wherein the axis of movement of the rotors are distanced from each other such that there is no overlap of rotor blade rotation circles of any of the four rotors, wherein each pair of rotors consists of one rotor rotating clockwise and one rotor rotating counter-clockwise and diagonally opposite rotors rotate in the same direction.

7. A quadcopter drone according to claim 6 wherein -
said one geometrical dimension (x) is between its forward pair of rotors and its rearward pair of rotors and said second different geometrical dimension (y) is between the rotors of each of said forward and rearward pair of rotors.

## Patentansprüche

1. Quadcopter-Drohne (210), die es ermöglicht, den Anstellwinkel (α) der Rotorblätter (215, 220, 225, 230) zu verändern, worin-
die Bewegungsachsen (235) von mindestens zwei Paaren der Rotoren der Quadcopter-Drohne in einer symmetrischen Konfiguration in Bezug auf die Gierebene der Quadcopter-Drohne geneigt sind, so dass jedes Paar zu einem anderen Punkt auf der gleichen Ebene entlang einer Längsachsenebene der Quadcopter-Drohne konvergiert, während ein Winkel (γ) zwischen den Rotationsebenen der Rotoren jedes Paares erzeugt wird, der kleiner als 180° und größer als 140° ist;
worin die Drohne ein Manövrieren in ihrer Gierebene ermöglicht, jedoch durch Änderung der Anstellwinkel (α) ihrer Rotorblätter, ohne die Drehgeschwindigkeit der Blätter zu ändern;
worin die Bewegungsachsen der Rotoren so voneinander beabstandet sind, dass sich die Rotationskreise der Rotorblätter von keinem der vier Rotoren überschneiden;
worin jedes Rotorpaar aus einem im Uhrzeigersinn und einem gegen den Uhrzeigersinn drehenden Rotor besteht und sich diagonal gegenüberliegende Rotoren in die gleiche Richtung drehen.

2. Quadcopter-Drohne nach Anspruch 1, worin -
das Antriebssystem der Drohne einen Verbrennungsmotor (754) umfasst.

3. Quadcopter-Drohne nach Anspruch 1, worin -
das Antriebssystem der Drohne ein Hybridsystem ist und aus einem Verbrennungsmotor (754) in Verbindung mit einem Elektromotor (761) besteht.

4. Verfahren zur Verbesserung der Manövrierfähigkeit in der Gierebene einer Quadcopter-Drohne (210), das es ermöglicht, die Neigung (α) der Rotorblätter (215, 220, 225, 230) zu modifizieren, welches die Schritte umfasst:
Bereitstellen der Bewegungsachse (235) von mindestens zwei Paaren der Rotoren der Quadcopter-Drohne, wenn diese in einer symmetrischen Konfiguration in Bezug auf die Gierebene der Quadcopter-Drohne gekippt werden, so dass diese in ihrer Richtung konvergieren, mit jedem Paar in Richtung eines anderen Punktes auf derselben Ebene entlang einer Längsachsenebene der Drohne, während ein Winkel (γ) zwischen den Rotationsebenen der Rotorblätter jedes Paares erzeugt wird, der kleiner als 180°, aber größer als 140° ist, worin die Bewegungsachsen der Rotoren derart voneinander beabstandet sind, dass sich die Rotationskreise der Rotorblätter von keinem der vier Rotoren überschneiden, worin jedes Paar von Rotoren aus einem im Uhrzeigersinn und einem gegen den Uhrzeigersinn rotierenden Rotor und diagonal gegenüberliegenden Rotoren besteht, die in der gleichen Richtung rotieren.

5. Verfahren nach Anspruch 4, wobei das Verfahren zusätzlich den Schritt umfasst:
Manövrieren der Quadcopter-Drohne zum Gieren durch Vergrößern des Anstellwinkels (α) eines diagonal gegenüberliegenden Paares von Rotorblättern, jedes von einem anderen Paar der symmetrisch geneigten zwei Paare von Rotoren, und Verkleinern des Anstellwinkels (α) der Blätter des verbleibenden Paares von Rotoren, die ebenfalls diagonal gegenüberliegen, jedes von einem anderen Paar der symmetrisch geneigten zwei Paare von Rotoren.

6. Quadcopter-Drohne (810), worin die Bewegungsachse (835) jedes der Rotoren (815, 820, 825, 830) der Quadcopter-Drohne zur Mitte der Quadcopter-Drohne hin geneigt ist und die Quadcopter-Drohne von der Art ist, die es ermöglicht, den Anstellwinkel (α) ihrer Rotorblätter zu verändern, worin-
die Quadcopter-Drohne mit einer geometrischen Abmessung (x) zwischen ihren vorderen Rotoren und ihren hinteren Rotoren und einer zweiten unterschiedlichen geometrischen Abmessung (y) zwischen den Rotoren jedes der vorderen und der hinteren Rotoren ausgebildet ist,
worin die Bewegungsachsen der Rotoren so voneinander beabstandet sind, dass sich die Rotationskreise der Rotorblätter von keinem der vier Rotoren überschneiden, worin jedes Rotorenpaar aus einem im Uhrzeigersinn und einem gegen den Uhrzeigersinn rotierenden Rotor besteht und diagonal gegenüberliegende Rotoren in die gleiche Richtung rotieren.

7. Quadcopter-Drohne nach Anspruch 6, worin -
die eine geometrische Abmessung (x) zwischen dem vorderen Rotorpaar und dem hinteren Rotorpaar liegt und die zweite unterschiedliche geometrische Abmessung (y) zwischen den Rotoren jedes der vorderen und hinteren Rotorpaare liegt.

## Revendications

1. Drone quadcoptère (210), qui permet de modifier l'angle de tangage (α) des pales de ses rotors (215, 220, 225, 230), dans lequel-
les axes de déplacement (235) d'au moins deux paires de rotors du drone quadcoptère sont inclinés dans une configuration symétrique par rapport au plan de lacet du drone quadcoptère, de sorte que chaque paire converge vers un autre point au même niveau le long d'un plan d'axe longitudinal du drone quadcoptère tout en créant un angle (γ) entre les plans de rotation des rotors de chaque paire, qui est inférieur à 180° et supérieur à 140°;
dans lequel ledit drone permet de manoeuvrer dans son plan de lacet, mais en modifiant les angles de tangage (α) des pales de ses rotors, sans changer la vitesse de rotation desdites pales;
dans lequel les axes de mouvement des rotors sont éloignés les uns des autres de manière à ce qu'il n'y ait pas de chevauchement des cercles de rotation des pales de l'un quelconque des quatre rotors;
chaque paire de rotors se compose d'un rotor tournant dans le sens des aiguilles d'une montre et d'un rotor tournant dans le sens inverse des aiguilles d'une montre, et de rotors diagonalement opposés tournant dans le même sens.

2. Drone quadcoptère selon la revendication 1, dans lequel -
le système de propulsion dudit drone comprend un moteur à combustion interne (754).

3. Drone quadcoptère selon la revendication 1, dans lequel -
le système de propulsion dudit drone est un système hybride, et comprend un moteur à combustion interne (754) en tandem avec un moteur électrique (761).

4. Procédé pour fournir une maniabilité améliorée dans le plan de lacet d'un drone quadcoptère (210) qui permet de modifier le tangage (α) des pales de ses rotors (215, 220, 225, 230), qui comprend l'étape consistant à -
fournir l'axe de déplacement (235) d'au moins deux paires de rotors du drone quadcoptère, lorsqu'ils sont inclinés dans une configuration symétrique par rapport au plan de lacet du drone quadcoptère pour qu'ils convergent dans leur direction, chaque paire vers un autre point au même niveau le long d'un plan d'axe longitudinal du drone, tout en créant un angle (γ) entre les plans de rotation des pales des rotors de chaque paire, inférieur à 180° mais supérieur à 140°, les axes de mouvement des rotors étant distants les uns des autres de manière à ce que les cercles de rotation des pales de chacun des quatre rotors ne se chevauchent pas, chaque paire de rotors étant composée d'un rotor tournant dans le sens des aiguilles d'une montre et d'un rotor tournant dans le sens inverse des aiguilles d'une montre, et de rotors diagonalement opposés tournant dans le même sens.

5. Procédé selon la revendication 4, dans lequel le procédé comprend en outre l'étape de -
manoeuvrer le drone quadcoptère en lacet en augmentant l'angle de tangage (α) des paires de pales de rotor diagonalement opposées, chacune provenant d'une autre paire de ces deux paires de rotors symétriquement inclinées, et en réduisant l'angle de tangage (α) des pales de la paire de rotors restante qui sont également diagonalement opposées l'une à l'autre, chacune provenant d'une paire différente de ces deux paires de rotors symétriquement inclinées.

6. Drone quadcoptère (810), l'axe de mouvement (835) de chacun des rotors du drone quadcoptère (815, 820, 825, 830) s'incline vers le centre du drone quadcoptère et ledit drone quadcoptère est du type qui permet de modifier l'angle de tangage (α) des pales de ses rotors, dans lequel-
ledit drone quadcoptère est formé avec une dimension géométrique (x) entre ses rotors avant et ses rotors arrière et une deuxième dimension géométrique différente (y) entre les rotors de chacun des rotors avant et arrière,
dans lequel les axes de mouvement des rotors sont éloignés les uns des autres de manière à ce que les cercles de rotation des pales des quatre rotors ne se chevauchent pas, chaque paire de rotors étant composée d'un rotor tournant dans le sens des aiguilles d'une montre et d'un rotor tournant dans le sens inverse des aiguilles d'une montre, et les rotors diagonalement opposés tournant dans le même sens.

7. Drone quadcoptère selon la revendication 6, dans lequel -
la première dimension géométrique (x) est située entre la paire de rotors avant et la paire de rotors arrière et la deuxième dimension géométrique différente (y) est située entre les rotors de chacune des paires de rotors avant et arrière.
